# FASCICULE DE BREVET EUROPEEN

(11) **EP 0 826 580 B1**
(45) Date de publication et mention de la délivrance du brevet: **25.07.2001**
(21) Numéro de dépôt: 97390006.1
(22) Date de dépôt: 28.08.1997
(51) Int. Cl.: B62D 51/00

(54) **Engin perfectionné de motoculture**
Verbessertes motorisiertes landwirtschaftliches Arbeitsgerät
Improved motorized agricultural working vehicle

(30) Priorité: 30.08.1996 FR 9610745
(43) Date de publication de la demande: 04.03.1998
(73) Titulaire: Faur, Jean, 31100 Toulouse (FR)
(72) Inventeur: Faur, Jean, 31100 Toulouse (FR)
(74) Mandataire: Cabinet BARRE LAFORGUE & associés

(56) Documents cités:
- EP-A- 0 242 443
- WO-A-89/01892
- DE-A- 2 836 814

## Description

L'invention concerne un engin de motoculture selon les caractéristiques du préambule de la revendication indépendante 1, tel que décrit notamment dans FR-A-2.457.627. Elle vise en particulier un engin polyvalent pouvant notamment être équipé de roues et faire office de motoculteur, ou équipé d'outils tels que des fraises et faire office de motobineuse.

A l'heure actuelle, les normes de sécurité visant à limiter les risques d'accidents lors de l'utilisation d'engins de motoculture tendent à devenir de plus en plus draconiennes. Ainsi, certaines législations imposent d'équiper ces engins de poignées coupe-cuircuit conçues pour provoquer l'arrêt du moteur lorsque l'utilisateur vient à lâcher cette poignée. De tels organes de sécurité ont pour avantage de supprimer la motricité de l'engin de motoculture et par conséquent provoquent l'arrêt de celui-ci en cas d'incident. Toutefois, concernant un grand nombre d'engins de motoculture, tel que celui décrit dans EP 0.242.443, l'action de ces organes de sécurité étant une simple action de coupure de moteur, ces engins se trouvent dans une configuration de roue libre une fois la poignée coupe-cuircuit relâchée. Par conséquent, de tels engins de motoculture peuvent continuer d'avancer ou de reculer, spécifiquement sur des terrains pentus, avec les risques inhérents à de tels déplacements non contrôlés. Il est à noter qu'en vue de remédier à cet inconvénient, certains engins de motoculture sont dotés d'un frein de parking. Toutefois, en cas d'incident, l'utilisateur n'a pas forcément le réflexe d'actionner ce frein de parking. De plus, il n'existe pas à l'heure actuelle d'organes de sécurité permettant de se garantir contre une fausse manoeuvre ou un défaut de fonctionnement de ces derniers.

La présente invention vise à pallier ces inconvénients et a pour objectif essentiel de fournir un engin de motoculture de conception très simple lui conférant un faible prix de revient et une très bonne fiabilité, conçu de surcroît pour s'immobiliser, quelle que soit la nature du terrain, lorsque cet engin n'est plus maîtrisé par un utilisateur.

Un autre objectif de l'invention est de fournir un engin de motoculture possédant une position de point mort facilitant les manoeuvres.

Un autre objection de l'invention est de fournir un engin de motoculture conçu pour éviter tout démarrage intempestif à une vitesse rapide en marche arrière.

A cet effet, l'invention vise un engin de motoculture dont le deuxième ensemble de transmission comprend :
- un pignon baladeur monté autour de l'arbre primaire, apte à pouvoir se déplacer axialement sur une course prédéterminée le long dudit arbre primaire, et à être entraîné en rotation avec ce dernier,
- un premier pignon satellite, dit de vitesse lente, monté sur un arbre parallèle à l'arbre primaire et agencé pour engrener avec le pignon baladeur dans une position prédéterminée de fin de course de ce dernier le long dudit arbre primaire,
- un deuxième pignon satellite, dit de vitesse rapide, monté sur un arbre parallèle à l'arbre primaire, ledit deuxième pignon satellite présentant un diamètre inférieur à celui du premier pignon satellite et étant agencé pour engrener avec le pignon baladeur dans une position prédéterminée de ce dernier le long de l'arbre primaire décalée axialement, par rapport à sa position d'engrenage avec le premier pignon satellite, d'une distance équivalente à la course dudit pignon baladeur,
- des moyens élastiques aptes à solliciter le pignon baladeur de façon à le maintenir dans sa position d'engrenage avec le premier pignon satellite,
- des moyens de déplacement du pignon baladeur vers sa position d'engrenage avec le deuxième pignon satellite à l'encontre de l'action des moyens élastiques,
- des moyens d'actionnement desdits moyens de déplacement du pignon baladeur,
- et des moyens de transmission reliant chaque pignon satellite et l'arbre récepteur.

L'invention a donc consisté à réaliser un engin de motoculture dont le deuxième ensemble de transmission mécanique se trouve naturellement en position de vitesse lente du fait que le pignon baladeur est sollicité par les moyens élastiques de façon à être maintenu dans sa position d'engrenage avec le premier pignon satellite.

Ainsi, en position débrayée du premier ensemble mécanique de transmission, moteur à l'arrêt ou en marche, l'engin de motoculture est automatiquement freiné au sol en raison de la démultiplication importante du deuxième ensemble mécanique de transmission. De ce fait notamment, cet engin de motoculture est conçu pour s'immobiliser immédiatement, quelle que soit la nature du terrain, lorsqu'il n'est plus maîtrisé par un utilisateur.

Par ailleurs, il est à noter la simplicité de cet engin de motoculture dont la transition entre la vitesse lente et la vitesse rapide est obtenue par le simple déplacement d'un pignon baladeur le long d'un arbre primaire.

Selon un mode de réalisation préférentiel :
- le premier ensemble mécanique de transmission est adapté pour permettre d'entraîner en rotation l'arbre primaire dans un sens ou l'autre de façon à permettre de déplacer l'engin en marche avant ou en marche arrière,
- les moyens de guidage comportent deux mancherons équipés chacun des moyens de commande constitués d'une poignée respectivement de marche avant et de marche arrière reliées au premier ensemble mécanique de transmission, en vue de la sélection du sens de rotation de l'arbre primaire,

Dans ce cas, les moyens d'actionnement des moyens de déplacement du pignon baladeur comprennent, en outre avantageusement une poignée, dite de vitesse rapide, montée sur le mancheron équipé de la poignée de marche arrière.

Cette disposition permet d'éviter tout démarrage intempestif à une vitesse rapide en marche arrière. En effet, lorsque le premier ensemble mécanique est embrayé en marche arrière, le démarrage s'effectue obligatoirement dans des conditions de vitesse lente du fait de la position naturelle du pignon baladeur. De plus, il est à noter que les poignées de marche arrière et de vitesse lente étant disposées sur le même mancheron ne peuvent être actionnées simultanément, sauf à lâcher l'autre mancheron et à actionner ces poignées avec les deux mains.

Il est à noter, par ailleurs, que le passage en vitesse rapide, en marche avant, nécessite deux manoeuvres, ce qui exclut tout risque d'erreur quant à l'emploi de cette vitesse.

En effet, ce passage en vitesse rapide nécessite, en premier lieu d'actionner la poignée de vitesse rapide qui conduit à déplacer le pignon baladeur, à l'encontre de l'action des moyens élastiques, vers sa position d'engrenage avec le deuxième pignon satellite.

Ensuite, tout en maintenant cette poignée actionnée, il convient d'actionner la poignée d'embrayage de marche avant.

Selon une autre caractéristique de l'invention visant le deuxième ensemble mécanique de transmission :
- le pignon baladeur est constitué de deux pignons coaxiaux accolés, de diamètres différents,
- les pignons satellites sont montés sur un même arbre parallèle à l'arbre primaire et agencés de façon que le pignon satellite de vitesse lente engrène avec le pignon de plus faible diamètre du pignon baladeur, et que le pignon satellite de vitesse rapide engrène avec le pignon de plus grand diamètre du pignon baladeur,
- les moyens de transmission comportent une transmission par chaîne comprenant une roue dentée agencée pour engrener avec le pignon satellite de vitesse rapide.

Par ailleurs, selon un mode de réalisation préférentiel, les moyens d'actionnement des moyens de déplacement du pignon baladeur sont aptes à positionner ce dernier, à l'encontre de l'action des moyens élastiques, dans une position dite de point mort, où ledit pignon baladeur se trouve dans une position intermédiaire entre les pignons satellites et non accouplé avec ces derniers.

Cette position de point mort, obtenue très simplement en déplaçant le pignon baladeur d'une course inférieure à celle permettant de passer en vitesse rapide, permet de manoeuvrer facilement l'engin de motoculture, moteur arrêté ou en marche, et notamment de réaliser aisément les demi-tours en bout de rangs.

Selon une autre caractéristique de l'invention, l'arbre primaire comporte un tronçon médian cannelé de longueur au moins équivalente à la course du pignon baladeur, ledit pignon baladeur présentant une face de contact avec ledit arbre primaire dotée de rainures conjuguées dudit tronçon cannelé.

De plus, en vue des déplacements du pignon baladeur et selon un mode de réalisation préférentiel :
- l'arbre primaire présente, sur une portion de sa longueur incorporant le tronçon cannelé, un alésage longitudinal débouchant au droit d'une des extrémités dudit tronçon primaire, ledit tronçon cannelé présentant une -paroi périphérique percée d'une lumière longitudinale,
- les moyens de déplacement du pignon baladeur comprennent :
   . une tige logée dans l'alésage de l'arbre primaire et de longueur adaptée pour s'étendre dans le prolongement dudit arbre primaire, ladite tige étant solidarisée au pignon baladeur au moyen d'une pièce s'étendant au travers de la lumière du tronçon cannelé,
- un organe de butée dit fixe, monté autour de la tige au droit de l'extrémité de cette dernière et solidarisé en rotation et en translation à cette dernière, et un organe de butée dit mobile, libre en rotation et en translation relativement à ladite tige et bloqué en translation par rapport au châssis, les moyens élastiques consistant en un ressort hélicoïdal de compression monté autour de la tige entre lesdits organes de butée,
   . un levier dit de vitesse rapide articulé sur le châssis autour d'un axe orthogonal à l'axe de l'arbre primaire, adapté pour être au contact de l'extrémité de la tige de façon à entraîner un déplacement axial de cette dernière, à l'encontre de l'action des moyens élastiques, lors de son pivotement engendré par les moyens d'actionnement.

En outre, et en vue d'obtenir la position de point mort, l'engin de motoculture comprend alors avantageusement :
- un deuxième levier dit de point mort articulé sur le châssis autour du même axe d'articulation que le levier de vitesse rapide, ledit levier étant associé à des moyens d'actionnement aptes à permettre de commander son pivotement, et comportant une butée de contact avec le levier de vitesse rapide agencée de façon à entraîner le pivotement simultané des deux leviers lors de l'actionnement du levier de point mort,
- un organe de butée agencé pour limiter l'angle de pivotement du levier du point mort et donc du levier de vitesse rapide à une valeur conduisant à un déplacement axial de la tige correspondant à la position de point mort du pignon baladeur.

Selon une autre caractéristique de l'invention, le moteur comporte un arbre de vilebrequin et un arbre de distribution entraînés en rotation en sens opposés, et le premier ensemble mécanique de transmission comprend :
- une poulie de marche avant montée sur l'arbre du vilebrequin et une poulie de marche arrière montée sur l'arbre de distribution,
- deux poulies réceptrices accolées montées sur l'arbre primaire,
- et deux courroies trapézoïdales reliant la poulie de marche avant et la poulie de marche arrière, chacune respectivement à une des poulies accolées,
- un support basculant articulé autour d'un axe parallèle à l'arbre primaire pour pouvoir basculer entre trois positions, une position extrême, dite de marche avant, de mise en tension de la courroie trapézoïdale associée à la poulie de marche avant, une position intermédiaire, dite débrayée, et une position extrême opposée à la première, dite de marche arrière, de mise en tension de la courroie trapézoïdale associée à la poulie de marche arrière,
- et des moyens de commande de la position du support basculant.

D'autres caractéristiques, buts et avantages de l'invention ressortiront de la description détaillée qui suit, en référence aux dessins annexés qui en représentent à titre d'exemple non limitatif un mode de réalisation préférentiel. Sur ces dessins qui font partie intégrante de la présente description :
- la figure 1 est une vue de dessus d'un engin de motoculture conforme à l'invention,
- la figure 2 en est une coupe longitudinale par un plan A représentant les deux ensembles mécaniques de transmission,

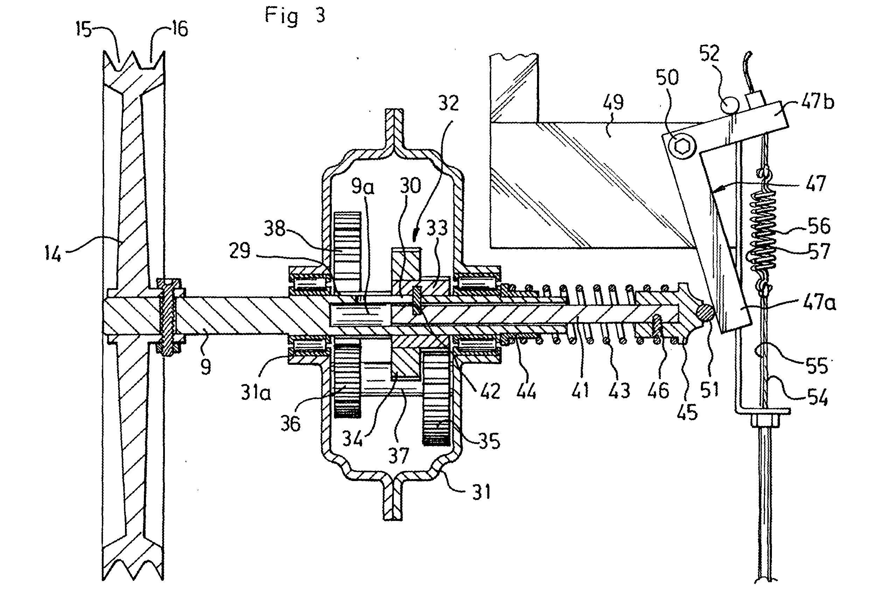

- la figure 3 en est une coupe transversale, à échelle agrandie, par un plan B,
- les figures 4, 5, 6 sont des vues en perspective représentant le deuxième ensemble de transmission mécanique respectivement en position de vitesse lente, en position de point mort, et en position de vitesse rapide,
- et la figure 7 7 est une vue de détail des leviers de point mort et de vitesse rapide.

L'engin de motoculture perfectionné représenté à titre d'exemple aux figures comprend de façon classique un châssis 1 portant un moteur 2, lequel entraîne en rotation et en sens opposés un arbre de vilebrequin transversal 3 et un arbre de distribution transversal 4. Cet engin est bien entendu pourvu d'un réservoir 5, d'un guidon 6 comportant deux mancherons 7, 8 ainsi que de tous les organes habituels équipant ce type d'engin.

Conformément à l'invention, l'engin est équipé de deux ensembles de transmission décrits en détail ci-après :
- un premier ensemble de transmission qui transmet le mouvement de rotation à un arbre primaire 9 et qui permet de régler le sens de marche de l'engin,
- un deuxième ensemble de transmission qui transmet le mouvement de rotation de l'arbre primaire 9 à un arbre récepteur surbaissé 10 sur lequel sont montés, selon l'utilisation envisagée, des roues porteuses 11 ou des outils de travail tournants tels que fraises, outils de coupe, etc. Ce deuxième ensemble de transmission permet notamment de sélectionner dans de remarquables conditions d'économie, de fiabilité et de souplesse, la vitesse de rotation de l'engin de motoculture pour l'adapter au travail à effectuer. Les vitesses autorisées consistent en une vitesse lente adaptée au labour (l'engin étant monté sur les roues 11 et équipé d'un soc) et à la marche arrière, et en une vitesse rapide adaptée à la rotation de fraises, à la marche à vide en labour, et aux déplacements avec remorque.

Il est à noter, en outre, que bien que l'engin de motoculture décrit vise un modèle n'autorisant que deux vitesses de rotation, ce dernier peut également être équipé , sans sortir du cadre de l'invention, d'éléments classiques tels que boîte à vitesse, variateur de vitesse permettant d'ajuster les vitesses autorisées.

En premier lieu, le premier ensemble de transmission comprend une poulie motrice 12 de marche avant montée sur l'arbre de vilebrequin 3, et une poulie motrice 13 de marche arrière montée sur l'arbre de distribution 4. Ces deux poulies motrices 12, 13 sont reliées à une poulie réceptrice 14 montée sur l'arbre primaire 9 et dont la jante présente deux gorges 15, 16 accolées, par l'intermédiaire de deux courroies trapézoïdales 17, 18.

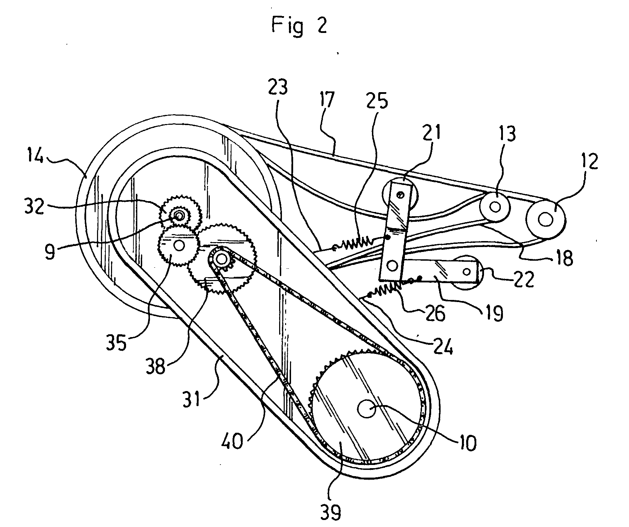

En outre, il convient de noter que tel que représenté à la figure 2, la poulie motrice de marche avant 12 et la poulie réceptrice 14 sont disposées de façon que, en position débrayée, la courroie trapézoïdale 17 reliant lesdites poulies présente un brin supérieur en tension. Lorsque l'engin est immobilisée, cette disposition permet, en effet, d'augmenter la force de freinage empêchant son recul, obtenue au moyen du deuxième ensemble de transmission décrit ci-après, grâce au frottement de la courroie trapézoïdale 17 à l'intérieur des gorges des poulies 12, 14.

De plus, la courroie trapézoïdale 18 reliant la poulie motrice de marche arrière 13 à la poulie réceptrice 14, présente une section de dimensions inférieures à celles de la gorge 16 de ladite poulie réceptrice. De ce fait, cette courroie trapézoïdale ne porte que sur le fond plat de la gorge 16 de la poulie réceptrice 14, et ne perturbe que très peu le fonctionnement de l'engin lorsque celui-ci est en marche avant.

De plus, en marche arrière, si le conducteur se trouve coincé contre un obstacle, la poulie glisse sur le fond plat de la gorge et limite la poussée.

Ce premier ensemble de transmission comprend également un support basculant 19 articulé autour d'un axe 20 parallèle à l'arbre primaire 9, de façon à pouvoir pivoter pour obtenir trois positions de fonctionnement (marche avant, débrayé, marche arrière). Ce support basculant 19 présente vu en élévation la forme d'un L sur chacune des branches duquel est monté un galet 21, 22, lesdits galets étant décalés transversalement et étant agencés pour être disposés : pour le premier galet 21, sous le brin inférieur de la courroie trapézoïdale 17 de marche avant, et pour le deuxième galet 22, au-dessus du brin supérieur de la courroie trapézoïdale 18 de marche arrière.

La position de ce support basculant 19 est commandé par deux câbles 23, 24 équipés de ressorts compensateurs 25, 26.

Le câble 23 est relié à une poignée 27 montée sur le mancheron gauche 7 du guidon 6, et permet de faire basculer le support basculant 19 vers l'avant de façon que le galet 21 tende la courroie trapézoïdale de marche avant 17.

Le câble 24 est quant à lui relié à une poignée 28 montée sur le mancheron droit 8 du guidon 7, et permet de faire basculer le support basculant 19 vers l'arrière de façon que le galet 22 tende la courroie trapézoïdale de marche arrière 18.

Le deuxième ensemble de transmission comprend, en premier lieu l'arbre primaire 9 précité. Cet arbre primaire 9 comprend un tronçon médian présentant des cannelures telles que 29, et dont la paroi périphérique est percée d'une lumière longitudinale 30.

Cet arbre primaire 19 présente, en outre, sur une portion de sa longueur incorporant le tronçon cannelé, un alésage longitudinal 9a débouchant au droit de l'extrémité dudit arbre primaire opposée à la poulie réceptrice 14.

Le tronçon cannelé de l'arbre primaire 9 est logé à l'intérieur d'un carter 31 par rapport auquel il est monté rotatif par l'intermédiaire de roulements tels que 31a. Ce carter 31, rempli d'un bain d'huile, s'étend selon un axe incliné de l'ordre de 45° par rapport à un axe vertical et renferme les organes de transmission du mouvement de rotation de l'arbre primaire 9 à l'arbre récepteur 10.

Le premier de ces organes de transmission consiste en un pignon baladeur 32 présentant une face de contact avec l'arbre primaire 9 dotée de rainures conjuguées des cannelures 29 de cet arbre primaire 9. Ce pignon baladeur 32 est, en outre, constitué de deux pignons coaxiaux 33, 34 accolés de diamètres différents.

Les organes de transmission comprennent, en outre, deux pignons 35, 36 montés sur un arbre 37 parallèle à l'arbre primaire 9, et accolés chacun à une des parois longitudinales du carter 31 :
- un pignon 35 de vitesse lente de diamètre adapté pour engrener avec le pignon 33 de plus faible diamètre du pignon baladeur 32, accolé contre la paroi du carter 31 opposée à la poulie réceptrice 14,
- un pignon 36 de vitesse rapide de diamètre adapté pour engrener avec le pignon 34 de plus grand diamètre du pignon baladeur 32.

Ces organes de transmission comprennent, enfin, une transmission par chaîne composée d'une roue dentée 38 reliée à une roue dentée 39 montée sur l'arbre récepteur 10 par une chaîne 40.

Le deuxième ensemble de transmission comprend, en outre, des moyens de déplacement du pignon baladeur 32 permettant d'obtenir trois positions de fonctionnement : vitesse lente constituant la position naturelle, point mort, et vitesse rapide.

Ces moyens de déplacement comprennent, en premier lieu, une tige 41 logée dans l'alésage 9a de l'arbre primaire 9, et de longueur adaptée pour s'étendre dans le prolongement dudit arbre primaire. Cette tige 41 est, en outre, solidarisée au pignon baladeur 32 au moyen d'une clavette 42 s'étendant au travers de la lumière 30 de l'arbre primaire 9.

Les moyens de déplacement comprennent, de plus, un ressort hélicoïdal de compression 43 monté autour de la tige 41 entre deux bagues 44, 45 de butée, lesdits ressorts et bagues de butée étant agencées de façon à solliciter la tige 41 de façon que le pignon baladeur 32 soit naturellement en position d'engrenage avec le pignon 35 de vitesse lente. A cet effet, les bagues de butée consistent en :
- une bague de butée 44 montée folle autour de l'arbre primaire et disposée en butée contre la paroi longitudinale du carter 31 opposée à la poulie réceptrice,
- une bague de butée 45 présentant la forme d'un capuchon coiffant l'extrémité de la tige 41, solidarisée à cette dernière au moyen d'une vis radiale 46.

Les moyens de déplacement comprennent par ailleurs, deux leviers 47, 48 dits de vitesse rapide et de point mort agencés pour entraîner un déplacement axial de la tige 41 à l'encontre de l'action du ressort de compression 43.

Ces deux leviers 47, 48 présentant chacun la forme d'un L, sont disposés de part et d'autre d'une platine horizontale 49 solidarisée au châssis 1, et articulés autour d'un axe vertical commun 50.

Le premier de ces leviers 47, de vitesse rapide, est disposé au-dessus de la platine 49 et agencé de façon que l'extrémité d'une de ses ailes 47a soit en contact avec l'extrémité de la tige 41. En outre, entre l'extrémité de cette aile 47a et la bague de butée 45 est interposée une bille 51 logée dans un évidement dont est pourvue la paroi frontale de ladite bague de butée.

Le deuxième levier 48, de point mort, disposé au-dessous de la platine 49, comporte quant à lui, un axe vertical 52 en butée contre la deuxième aile 47b du levier de vitesse rapide 47, de façon à provoquer le pivotement dudit levier de vitesse rapide lors de son propre pivotement.

Ce levier de point mort 48 est, en outre, associé à un organe de butée 53 disposé sous la platine 49 et destiné à limiter son angle de pivotement à une valeur conduisant à un déplacement axial de la tige 41 permettant d'amener le pignon baladeur 32 dans une position de point mort où il n'engrène avec aucun des pignons satellites 35, 36.

Tel que représenté à la figure 7, cet organe de butée 53 consiste en un ensemble vis-écrou autorisant d'ajuster l'angle de pivotement du levier de point mort 48.

Le pivotement de ces leviers 47, 48 est commandé, pour chacun d'eux par un câble 54, 55 équipé d'un ressort compensateur 56, 57. La fonction de ces ressorts compensateurs 56, 57 de même que celle des ressorts compensateurs 25, 26 décrits ci-dessus, est double. En effet, et en premier lieu, ces ressorts compensateurs 25, 26, 56, 57 permettent de limiter l'effort musculaire à exercer et les efforts sollicitant les organes liés aux câbles correspondants, tout en autorisant d'amener les poignées au contact des mancherons de façon à fournir à l'utilisateur un confort de conduite. De plus, ils permettent de pouvoir utiliser toute la course des poignées, et de ce fait aucun réglage de tension n'est à effectuer.

Le câble 54 du levier de vitesse rapide 47 est relié à une poignée 58 montée sur le mancheron droit 8 du guidon 6, et permet de faire pivoter ledit levier de façon à amener le pignon baladeur 32 dans sa position d'engrenage avec le pignon satellite de vitesse rapide 36.

Le câble 55 du levier de point mort 48 est relié à une poignée 59 montée sur le mancheron gauche 7 du guidon 6 et permet, tel que précité, de faire pivoter ledit levier et donc simultanément le levier de vitesse rapide 47 jusqu'à obtenir la position de point mort du pignon baladeur 32.

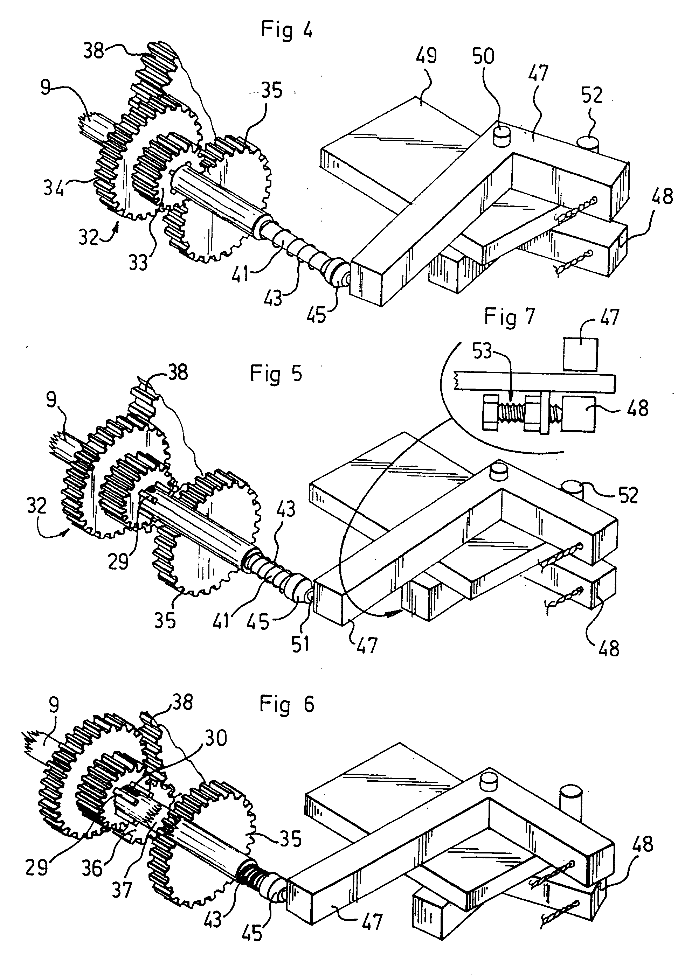

Ces positions de point mort et de grande vitesse sont représentées respectivement aux figures 5 et 6. La figure 4 représente quant à elle la position naturelle du pignon baladeur 32 obtenue lorsque les poignées 58, 59 ne sont pas actionnées, dans laquelle ce pignon baladeur 32 engrène avec le pignon satellite de vitesse lente 35, et ce quel que soit l'état embrayé ou débrayé des courroies trapézoïdales 17, 18.

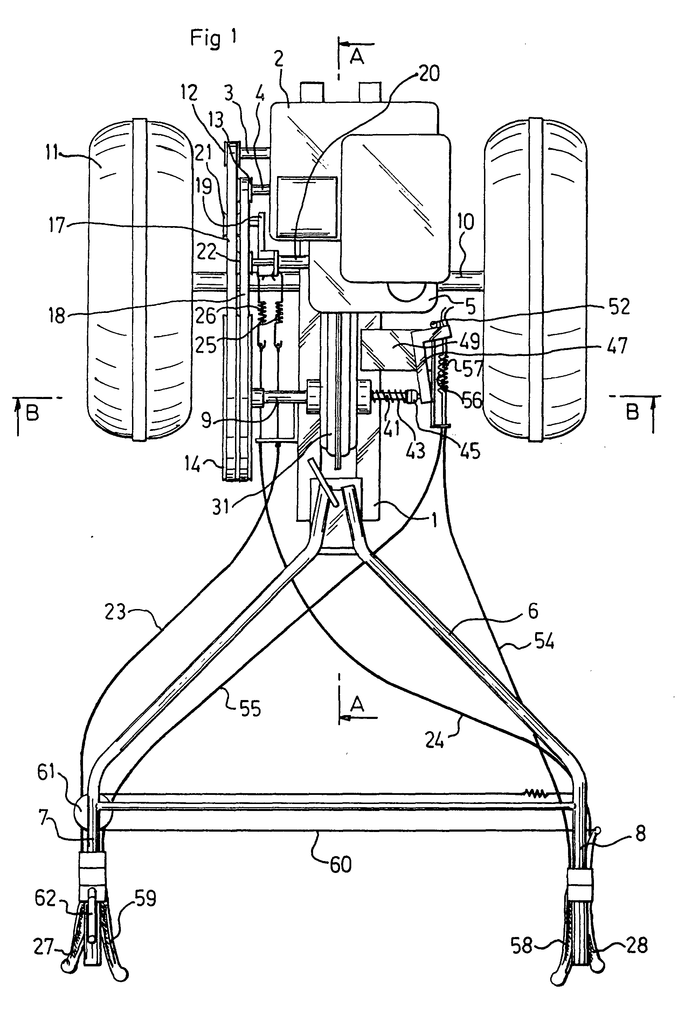

Tel que représenté à la figure 1, l'engin de motoculture selon l'invention comprend, par ailleurs, un câble 60 tendu entre les deux mancherons 7, 8, ce câble 60 comportant, par l'intermédiaire d'une poulie de renvoi 61 montée sur le mancheron gauche 7, deux brins dont les extrémités sont solidarisées respectivement au mancheron droit 8 et à l'extrémité avant de la poignée de marche arrière 28.

La fonction d'un tel câble 60 est d'entraîner automatiquement le retour de la poignée de marche arrière 28 dans sa position de débrayage, dans l'éventualité où l'utilisateur se trouve coincé entre un obstacle et l'engin de motoculture lors d'une marche arrière. En effet, dans cette hypothèse, le corps de l'utilisateur rentre en contact avec le câble 60 qui ramène la poignée 28 dans sa position de débrayage où l'engin est automatiquement freiné et immobilisé.

Tel que représenté à la figure 1, l'engin de motoculture comprend, enfin, une poignée coupe-circuit 62 reliée au moteur 2 et disposée au niveau des moyens de guidage. En l'exemple, cette poignée 62 est disposée sur le mancheron gauche 7, et interdit ainsi de réaliser une marche arrière en vitesse rapide car cette manoeuvre nécessite d'actionner avec les deux mains, les deux poignées 28, 58, situées sur le mancheron droit 8.

A titre d'exemple, les ensembles de transmission d'un tel engin de motoculture sont conçus de façon à obtenir :
- un rapport de démultiplication entre le moteur 2 et l'arbre primaire 9 de 1 à 5,5 en marche avant, et de 1 à 11 en marche arrière,
- un rapport de démultiplication entre l'arbre primaire 9 et l'arbre récepteur 10 de 1 à 20 en vitesse lente, et de 1 à 5,3 en vitesse rapide.

De tels rapports permettent en effet d'obtenir des vitesses adaptées aux travaux habituels à effectuer.

Ainsi, par exemple, un engin de motoculture tel que décrit ci-dessus équipé de roues d'un diamètre de 500 centimètres se déplace :
- pour une vitesse de rotation du moteur 2 de 3000 t/min à 2,4 km/h en vitesse lente marche avant, à 8,8 km/h en vitesse rapide marche avant, et à 1,2 km/h en marche arrière,
- pour une vitesse de rotation du moteur 2 de 2000 t/min à une vitesse de 5,8 km/h en vitesse rapide marche avant.

On conçoit l'intérêt de l'engin conforme à l'invention qui associe à une grande souplesse et à une excellente sécurité de fonctionnement et d'utilisation, une robustesse et une simplicité structurelle entraînant une réduction des coûts et une augmentation de durée de vie par rapport aux engins connus.

## Revendications

1. Engin perfectionné de motoculture comprenant :
- un châssis (1) doté de moyens (6) de guidage de l'engin,
- un moteur (2) entraînant en rotation un arbre moteur (3, 4),
- un arbre primaire intermédiaire (9) parallèle à l'arbre moteur (3, 4),
- un premier ensemble mécanique de transmission (12-22) reliant l'arbre moteur (3, 4) et l'arbre primaire (9),
- des moyens de commande (27, 28) d'actionnement du premier ensemble mécanique de transmission (12-22), disposés au niveau des moyens de guidage (6),
- un arbre récepteur surbaissé (10) parallèle à l'arbre primaire (9) d'entraînement de roues porteuses (11) ou d'outils de travail,
- et un deuxième ensemble mécanique de transmission (32-40) reliant l'arbre primaire (9) et l'arbre récepteur (10),
ledit engin étant caractérisé en ce que le deuxième ensemble de transmission comprend :
- un pignon baladeur (32) monté autour de l'arbre primaire (9), apte à pouvoir se déplacer axialement sur une course prédéterminée le long dudit arbre primaire, et à être entraîné en rotation avec ce dernier,
- un premier pignon satellite (35), dit de vitesse lente, monté sur un arbre (37) parallèle à l'arbre primaire (9) et agencé pour engrener avec le pignon baladeur (32) dans une position prédéterminée de fin de course de ce dernier le long dudit arbre primaire,
- un deuxième pignon satellite (36), dit de vitesse rapide, monté sur un arbre (37) parallèle à l'arbre primaire (9), ledit deuxième pignon satellite présentant un diamètre inférieur à celui du premier pignon satellite (35) et étant agencé pour engrener avec le pignon baladeur (32) dans une position prédéterminée de ce dernier le long de l'arbre primaire (9) décalée axialement, par rapport à sa position d'engrenage avec le premier pignon satellite (35), d'une distance équivalente à la course dudit pignon baladeur,
- des moyens élastiques (43) aptes à solliciter le pignon baladeur (32) de façon à le maintenir dans sa position d'engrenage avec le premier pignon satellite (35),
- des moyens (41, 47, 48) de déplacement du pignon baladeur (32) vers sa position d'engrenage avec le deuxième pignon satellite (36) à l'encontre de l'action des moyens élastiques (43),
- des moyens (58, 59) d'actionnement desdits moyens de déplacement du pignon baladeur (32),
- et des moyens de transmission (38-40) reliant chaque pignon satellite (35, 36) et l'arbre récepteur (10).

2. Engin de motoculture selon la revendication 1 dans lequel :
- le premier ensemble mécanique de transmission (12-22) est adapté pour permettre d'entraîner en rotation l'arbre primaire (9) dans un sens ou l'autre de façon à permettre de déplacer l'engin en marche avant ou en marche arrière,
- les moyens de guidage (6) comportent deux mancherons (7, 8) équipés chacun des moyens de commande constitués d'une poignée (27, 28) respectivement de marche avant et de marche arrière reliées au premier ensemble mécanique de transmission, en vue de la sélection du sens de rotation de l'arbre primaire (9),
ledit engin de motoculture étant caractérisé en ce que les moyens d'actionnement des moyens (41, 47, 48) de déplacement du pignon baladeur (32) comprennent une poignée (58) dite de vitesse rapide, montée sur le mancheron (8) équipé de la poignée de marche arrière (28).

3. Engin de motoculture selon l'une des revendications 1 ou 2, caractérisé en ce que :
- le pignon baladeur (32) est constitué de deux pignons coaxiaux accolés (33, 34), de diamètres différents,
- les pignons satellites (35-36) sont montés sur un même arbre (37) parallèle à l'arbre primaire (9) et agencés de façon que le pignon satellite de vitesse lente (35) engrène avec le pignon de plus faible diamètre du pignon baladeur (32), et que le pignon satellite de vitesse rapide (36) engrène avec le pignon (34) de plus grand diamètre du pignon baladeur (32),
- les moyens de transmission comportent une transmission par chaîne (40) comprenant une roue dentée (38) agencée pour engrener avec le pignon satellite de vitesse rapide (36).

4. Engin de motoculture selon l'une des revendications précédentes, caractérisé en ce que les moyens de déplacement du pignon baladeur (32) sont aptes à positionner ce dernier, à l'encontre de l'action des moyens élastiques (43), dans une position dite de point mort, où ledit pignon baladeur se trouve dans une position intermédiaire entre les pignons satellites (35, 36) et non accouplé avec ces derniers.

5. Engin de motoculture selon l'une des revendications précédentes, caractérisé en ce que l'arbre primaire (9) comporte un tronçon médian cannelé de longueur au moins équivalente à la course du pignon baladeur (32), ledit pignon baladeur présentant une face de contact avec ledit arbre primaire dotée de rainures conjuguées dudit tronçon cannelé.

6. Engin de motoculture selon l'une des revendications précédentes, caractérisé en ce que :
- l'arbre primaire (9) présente, sur une portion de sa longueur incorporant le tronçon cannelé, un alésage longitudinal (9a) débouchant au droit d'une des extrémités dudit tronçon primaire, le tronçon cannelé présentant une paroi périphérique percée d'une lumière longitudinale (30),
- les moyens de déplacement du pignon baladeur comprennent :
. une tige (41) logée dans l'alésage (9a) de l'arbre primaire (9) et de longueur adaptée pour s'étendre dans le prolongement dudit arbre primaire, ladite tige étant solidarisée au pignon baladeur (32) au moyen d'une pièce (42) s'étendant au travers de la lumière (30) du tronçon cannelé,
- un organe de butée dit fixe (45), monté autour de la tige (41) au droit de l'extrémité de cette dernière et solidarisé en rotation et en translation à cette dernière, et un organe de butée dit mobile (44), libre en rotation et en translation relativement à ladite tige et bloqué en translation par rapport au châssis (1), les moyens élastiques (43) consistant en un ressort hélicoïdal de compression monté autour de la tige (41) entre lesdits organes de butée,
. un levier (47) dit de vitesse rapide articulé sur le châssis (1) autour d'un axe orthogonal à l'axe de l'arbre primaire (9), adapté pour être au contact de l'extrémité de la tige (41) de façon à entraîner un déplacement axial de cette dernière, à l'encontre de l'action des moyens élastiques (43), lors de son pivotement engendré par les moyens d'actionnement (58).

7. Engin de motoculture selon la revendication 6, caractérisé en ce que l'organe de butée fixe (45) présente la forme d'un capuchon coiffant l'extrémité de la tige (41) et doté d'une paroi frontale présentant un évidement apte à loger une bille (51) maintenue dans ledit logement par le levier (47).

8. Engin de motoculture selon la revendication 4 et l'une des revendications 6 ou 7 prises ensemble, caractérisé en ce qu'il comprend :
- un deuxième levier (48) dit de point mort articulé sur le châssis (1) autour du même axe d'articulation que le levier de vitesse rapide (47), ledit levier étant associé à des moyens d'actionnement (59) aptes à permettre de commander son pivotement, et comportant une butée (52) de contact avec le levier de vitesse rapide (47) agencée de façon à entraîner le pivotement simultané des deux leviers (47, 48) lors de l'actionnement du levier de point mort (48),
- un organe de butée (53) agencé pour limiter l'angle de pivotement du levier de point mort (48) et donc du levier de vitesse rapide (47) à une valeur conduisant à un déplacement axial de la tige (41) correspondant à la position de point mort du pignon baladeur (32).

9. Engin de motoculture selon l'une des revendications précédentes dans lequel le moteur (2) comporte un arbre de vilebrequin (3) et un arbre de distribution (4) entraînés en rotation en sens opposés, caractérisé en ce que le premier ensemble mécanique de transmission comprend :
- une poulie de marche avant (12) montée sur l'arbre du vilebrequin (3) et une poulie de marche arrière (13) montée sur l'arbre de distribution (4),
- deux poulies réceptrices accolées (15, 16) montées sur l'arbre primaire (9),
- deux courroies trapézoïdales (17, 18) reliant la poulie de marche avant (12) et la poulie de marche arrière (13), chacune respectivement à une des poulies accolées (15, 16),
- un support basculant (19) articulé autour d'un axe (20) parallèle à l'arbre primaire (9) pour pouvoir basculer entre trois positions, une position extrême, dite de marche avant, de mise en tension de la courroie trapézoïdale (17) associée à la poulie de marche avant (12), une position intermédiaire, dite débrayée, et une position extrême opposée à la première, dite de marche arrière, de mise en tension de la courroie trapézoïdale (18) associée à la poulie de marche arrière (13),
- et des moyens (27, 28) de commande de la position du support basculant (19).

10. Engin de motoculture selon la revendication 9, caractérisé en ce que la poulie de marche avant (12) et la poulie réceptrice (15) associée sont disposées de façon que la courroie trapézoïdale (17) reliant ledites poulies présente un brin supérieur en tension dans la position débrayée.

11. Engin de motoculture selon l'une des revendications 9 ou 10, caractérisé en ce que la poulie réceptrice (16) associée à la poulie de marche arrière (13) comporte une jante présentant une gorge trapézoïdale de dimensions supérieures à celles de la section de la courroie trapézoïdale (18) reliant ledites poulies.

12. Engin de motoculture selon la revendication 2, caractérisé en ce qu'il comporte un câble (60) tendu entre les mancherons (7, 8), ledit câble comportant, par l'intermédiaire d'une poulie de renvoi (61) montée sur le mancheron équipé de la poignée de marche avant (27), deux brins dont les extrémités sont solidarisées respectivement au mancheron (8) équipé de la poignée de marche arrière (28) et à l'extrémité avant de ladite poignée de marche arrière.

13. Engin de motoculture selon l'une des revendications 1, 2, 4 ou 9, caractérisé en ce que les moyens d'actionnement et les moyens de commande comprennent des câbles (23, 24, 54, 55) équipés de ressorts compensateurs (25, 26, 56, 57).

14. Engin de motoculture selon l'une des revendications précédentes, caractérisé en ce qu'il comprend une poignée coupe-circuit (62) reliée au moteur (2) et disposée au niveau de moyens de guidage (6).

## Patentansprüche

1. Verbesserte Agrarmaschine, bestehend aus :
- einem Rahmen mit Führungsmitteln (6) zum Führen der Maschine,
- einem Motor (2) für den Drehantrieb einer Antriebswelle (3, 4),
- einer mittleren Hauptwelle (9), parallel zur Antriebswelle (3, 4),
- einer ersten mechanischen Verbindungsanlage (12-22), verbindend die Hauptwelle (9) mit der Antriebswelle (3, 4),
- Steuermitteln (27, 28) zum Steuern der Betätigung der ersten mechanischen Verbindungsanlage (12-22), angeordnet an Führungsmitteln (6),
- einer tiefliegenden Annahmewelle (10), parallel zur Hauptwelle (9) zum Antreiben von Landrädern (11) oder Bearbeitungsgeräten,
- und einer zweiten mechanischen Verbindungsanlage (32-40), verbindend die Hauptwelle (9) mit der Annahmewelle (10),
wobei die genannte Agrarmaschine dadurch gekennzeichnet ist, daß die zweite mechanische Verbindungsanlage besteht aus :
- einem Schieberad (32), montiert um die Hauptwelle (9), und geeignet für seine axiale Bewegung auf einer vorbestimmten Strecke entlang der genannten Hauptwelle und für seinen Drehantrieb mit dieser,
- einem ersten Planetenrad (35), sogenanntem langsamlaufplanetenrad, montiert an einer zur Hauptwelle (9) parallelen Welle (37), und angeordnet zum Eingreifen ins Schieberad (32) in einer vorbestimmten Endstellung dieses Schieberads entlang der genannten Hauptwelle,
- einem zweiten Planetenrad (36), sogenanntem schnelllaufplanetenrad, montiert an einer zur Hauptwelle (9) parallelen Welle (37), wobei das genannte zweite Planetenrad einen kleineren Durchmesser als diesen des ersten Planetenrads (35) aufweist, und zum Eingreifen ins Schieberad (32) in einer vorbestimmten Stellung dieses Schieberads entlang der Hauptwelle (9) angeordnet ist, welche Stellung bezüglich dessen Eingriffsstellung ins ersten Planetenrad (35) von einem der Strecke des genannten Schieberads entsprechenden Abtand axial versetzt ist,
- elastischen Mitteln (43), geeignet für die Einwirkung auf das Schieberad (32), so daß es in seiner Eingriffsstellung ins erste Planetenrad (35) gehalten ist,
- Bewegungsmitteln (41, 47, 48) zum Bewegen des Schieberads (32) nach seiner Eingriffsstellung ins zweite Planetenrad (36) gegen die Wirkung der elastischen Mittel (43),
- Betätigungsmitteln (58, 59) zum Betätigen der genannten Bewegungsmittel zum Bewegen des Schieberads (32), und
- Verbindungsmitteln (38-40), verbindend jedes Planetenrad (35, 36) mit der Annahmewelle (10).

2. Agrarmaschine nach Anspruch 1 :
- bei der die erste mechanische Verbindungsanlage (12-22), geeignet für den Drehantrieb der Hauptwelle (9) in einer oder anderer Richtung, so daß sie die Vorwärts- oder Rückwärtsbewegung der Agrarmaschine erlaubt,
- bei der die Führungsmittel (6) zwei Pfluggriffe (7, 8) mit jeweils Steuermitteln umfassen, wobei die Steuermittel aus einem Vorlauf- bzw. Rücklaufgriff (27, 28) bestehen, welcher mit der ersten mechanischen Verbindungsanlage zur Auswahl der Drehrichtung der Hauptwelle (9) verbunden ist,
wobei die genannte Agrarmaschine dadurch gekennzeichnet ist, daß die Betätigungsmittel zum Betätigen der Bewegungsmittel (41, 47, 48) zum Bewegen des Schieberads (32) einen Griff (58), sogenannten Schnelllaufgriff, umfassen, der am mit dem Rücklaufgriff (28) versehenen Pfluggriff (8) montiert ist.

3. Agrarmaschine nach einem der Ansprüche 1 oder 2, dadurch gekennzeichnet,
- daß das Schieberad (32) aus zwei koaxialen angebauten Rädern (33, 34) mit verschiedenen Durchmessern besteht,
- daß die Planetenräder (35-36) an einer gemeinsamen zur Hauptwelle (9) parallelen Welle (37) montiert, und so angeordnet sind, daß das Langsamlaufplanetenrad (35) ins Rad von kleinerem Durchmesser des Schieberads (32), und das Schnelllaufplanetenrad (36) ins Rad (34) von größerem Durchmesser des Schieberads (32) eingreift,
- daß die Verbindungsmittel eine Verbindungskette (40) mit einem Zahnrad (38), angeordnet zum Eingreifen ins Schnelllaufplanetenrad (36), umfassen.

4. Agrarmaschine nach einem der vorhergehenden Ansprüche, dadurch gekennzeichnet, daß die Bewegungsmittel zum Bewegen des Schieberads (32) für dessen Positionierung gegen die Wirkung der elastischen Mittel (43) in eine Stellung, sogenannte Leerlaufstellung, geeignet sind, in der das genannte Schieberad sich in einer Zwischenstellung zwischen den Planetenrädern (35, 36) befindet, in der es nicht mit diesen eingekuppelt ist.

5. Agrarmaschine nach einem der vorhergehenden Ansprüche, dadurch gekennzeichnet, daß die Hauptwelle (9) ein geripptes mittleres Teilstück von einer zumindest der Strecke des Schieberads (32) entsprechenden Länge umfaßt, wobei das genannte Schieberad eine Kontaktfläche mit der genannte Hauptwelle aufweist, die mit Nuten entsprechend dem genannten gerippten Teilstück versehen ist.

6. Agrarmaschine nach einem der vorhergehenden Ansprüche, dadurch gekennzeichnet,
- daß die Hauptwelle (9) auf einer Portion ihrer Länge mit dem gerippten Teilstück eine Längsbohrung (9a) aufweist, die sich in Höhe eines der Enden des genannten Hauptteilstücks öffnet, wobei das gerippte Teilstück einen Umfangswand ausweist, in dem eine Längsöffnung (30) durchgebohrt ist,
- daß die Bewegungsmittel zum Bewegen des Schieberads umfassen :
. eine Stange (41), gelagert in der Bohrung (9a) der Hauptwelle (9), und von einer für die Erstreckung in der Verlängerung der genannten Hauptwelle geeigneten Länge, wobei die genannte Stange am Schieberad (32) durch einen sich durch die Langsöffnung (30) im gerippten Teilstück erstreckenden Teil (42) befestigt ist,
. ein Anschlagorgan, sogenanntes festes Anschlagorgan (45), montiert um eine Stange (41) in Höhe deren Endes, und befestigt undrehbar und unverschiebbar an dieser Stange, und ein Anschlagorgan, sogenanntes bewegliches Anschlagorgan (44), drehbar und verschiebbar bezüglich der genannten Stange, und blockiert unverschiebbar bezüglich dem Rahmen (1), wobei die elastischen Mittel (43) aus einer zylindrischen Schraubendruckfeder, montiert um die Stange (41) zwischen den genannten Anschlagorganen, bestehen,
. einen Hebel (47), sogenannten Schnelllaufhebel, gelenkig am Rahmen (1) um eine zur Asche der Hauptwelle (9) senkrechte Achse, und geeignet für die Berührung mit dem Ende der Stange (41), so daß er diese Stange in eine axiale Bewegung gegen die Wirkung der elastischen Mittel (43) bei seinem von den Betätigungsmitteln (58) erzeugten Schwenken bringt.

7. Agrarmaschine nach Anspruch 6, dadurch gekennzeichnet, daß das feste Anschlagorgan (45) die Form einer Kappe aufweist, die das Ende der Stange (41) überdeckt, und mit einer Vorderwand versehen ist, die eine Vertiefung, geeignet für das Aufnehmen einer durch den Hebel (47) in der genannten Vertiefung gehaltenen Kugel (51), aufweist.

8. Agrarmaschine nach Anspruch 4 und einem der Ansprüche 6 oder 7, berücksichtigt zusammen, dadurch gekennzeichnet, daß sie umfaßt :
- einen zweiten Hebel (48), sogenannten Leerlaufstellungshebel, der am Rahmen (1) um dieselbe Gelenkachse wie der Schnelllaufhebel (47) gelenkig ist, wobei der genannte Hebel Betätigungsmitteln (59) zugeordnet ist, die sich für das Steuern seiner Schwenkung eignen, und einen Berührungsanschlag (52) mit dem Schnelllaufhebel (47) aufweist, welcher so angeordnet ist, daß er die gleichzeitige Schwenkung der beiden Hebel (47, 48) bei der Betätigung des Leerlaufstellungshebels (48) erzeugt,
- ein Anschlagorgan (53), angeordnet zum Begrenzen des Schwenkwinkels des Leerlaufstellungshebels (48) und demzufolge des Schnelllaufhebels (47) auf einen Wert, der eine axiale Bewegung der Stange (41), entsprechend der Leerlaufstellung des Schieberads (32), erlaubt.

9. Agrarmaschine nach einem der vorhergehenden Ansprüche, bei der der Motor (2) eine Kurbelwelle (3) und eine Steuerwelle (4), angetrieben in Drehung in Gegenrichtungen, aufweist, dadurch gekennzeichnet, daß der erste mechanische Verbindungsanlage umfaßt :
- eine Vorlaufrolle (12), montiert an der Kurbelwelle (3), und eine Rücklaufrolle (13), montiert an der Steuerwelle (4),
- zwei angebaute Annahmerolle (15, 16), montiert an der Hauptwelle (9),
- zwei Keilriemen (17, 18), verbindend die Vorlaufrolle (12) und die Rücklaufrolle (13) mit jeweils den angebauten Rollen (15, 16),
- einen Kippträger (19), gelenkig um eine zur der Hauptwelle (9) parallele Achse (20), um unter drei Stellungen kippbar zu sein, nämlich :
. einer extremen Stellung, sogenannter Vorlaufstellung, zum Spannen des der Vorlaufrolle (12) zugeordneten Keilriemens (17),
. einer Zwischenstellung, sogenannter ausgekuppelter Stellung, und
. einer extremen der ersten Stellung entgegengesetzten Stellung, sogenannter Rücklaufstellung, zum Spannen des der Rücklaufrolle (13) zugeordneten Keilriemens (18),
- und Steuermitteln (27, 28) zum Steuern der Stellung des Kippträgers (19).

10. Agrarmaschine nach Anspruch 9, dadurch gekennzeichnet, daß die Vorlaufrolle (12) und die zugeordnete Annahmerolle (15) so angeordnet sind, daß der Keilriemen (17), verbindend die genannten Rollen, einen gespannten Obertrumm in der ausgekuppelten Stellung aufweist.

11. Agrarmaschine nach einem der Ansprüche 9 oder 10, dadurch gekennzeichnet, daß die der Rücklaufrolle (13) zugeordnete Annahmerolle (16) einen Scheibenkranz aufweist, der mit einer trapezförmigen Kehle versehen ist, deren Dimensionen größer als die Dimensionen des Querschnitts des die genannten Rollen verbindenden Keilriemens (18) sind.

12. Agrarmaschine nach Anspruch 2, dadurch gekennzeichnet, daß sie ein zwischen den Pfluggriffen (7, 8) gespanntes Kabel (60) aufweist, wobei das genannte Kabel durch eine am Pfluggriff mit dem Vorlaufgriff (27) montierte Umführrolle (61) zwei Trumme aufweist, deren Enden jeweils am Pfluggriff (8) mit dem Rücklaufgriff (28) und am Vorende des genannten Rücklaufgriff befestigt sind.

13. Agrarmaschine nach einem der Ansprüche 1, 2, 4 oder 9, dadurch gekennzeichnet, daß die Betätigungsmittel und die Steuermittel Kabel (23, 24, 54, 55) mit Ausgleichfedern (25, 26, 56, 57) umfassen.

14. Agrarmaschine nach einem der vorhergehenden Ansprüche, dadurch gekennzeichnet, daß sie einen mit dem Motor (2) verbundenen, und an Führungsmitteln (6) angeordneten Sicherungsgriff (62) umfaßt.

## Claims

1. Improved machine for mechanised farming comprising:
- a frame (1) provided with guiding means (6) for guiding the machine,
- a motor (2) driving in rotation a driving shaft (3, 4),
- an intermediary primary shaft (9) parallel to the driving shaft (3, 4),
- a first mechanical transmission assembly (12-22) connecting the driving shaft (3, 4) to the primary shaft (9),
- control means (27, 28) for controlling the actuation of the first mechanical transmission assembly (12-22), arranged at guiding means (6),
- a lowered output shaft (10) parallel to the primary shaft (9) for driving land wheels (11) or tools,
- and a second mechanical transmission assembly (32-40) connecting the primary shaft (9) to the output shaft (10),
said machine being characterised in that the second transmission assembly comprises:
- a sliding gear wheel (32) mounted around the primary shaft (9) and able to axially move on a predetermined course along said primary shaft and to be driven in rotation with it,
- a first planet wheel (35), so-called low-speed planet wheel, mounted on a shaft (37) parallel to the primary shaft (9) and arranged to mesh with the sliding gear wheel (32) in a predetermined travel-limit position thereof along said primary shaft,
- a second planet wheel (36), so-called fast-speed planet wheel, mounted on a shaft (37) parallel to the primary shaft (9), said second planet wheel having a diameter less than that of the first planet wheel (35) and being arranged to mesh with the sliding gear wheel (32) in a predetermined position thereof along the primary shaft (9) and axially offset from its meshing position with the first planet wheel (35) by a distance equivalent to the course of said sliding wheel,
- spring means (43) able to actuate the sliding gear wheel (32) so as to maintain it in its meshing position with the first planet wheel (35),
- displacement means (41, 47, 48) for displacing the sliding gear wheel (32) to its meshing position with the second planet wheel (36) against the action of spring means (43),
- actuation means (58, 59) for actuating said displacement means for displacing the sliding gear wheel (32),
- and transmission means (38-40) connecting each planet wheel (35, 36) to the output shaft (10).

2. Machine for mechanised farming according to claim 1 in which:
- the first mechanical transmission assembly (12-22) is adapted to drive in rotation the primary shaft (9) in one direction or the other so as to move the machine in a progressive motion or in a reverse motion,
- guiding means (6) comprise two plough tails (7, 8), each provided with control means made up of a progressive motion handle, resp. reverse motion handle, (27, 28) connected to the first mechanical transmission assembly in view of selecting the sense of rotation of the primary shaft (9),
said machine for mechanised farming being characterised in that actuation means for actuating displacement means (41, 47, 48) for displacing the sliding gear wheel (32) comprise a handle (58), so-called fast-speed handle, mounted on the plough tail (8) provided with the reverse motion handle (28).

3. Machine for mechanised farming according to one of claims 1 or 2, characterised in that:
- the sliding gear wheel (32) is made up of two coaxial attached gear wheels (33, 34) with different diameters,
- the planet wheels (35-36) are mounted on the same shaft (37) parallel to the primary shaft (9) and arranged so that the slow-speed planet wheel (35) meshes with the smaller-diameter gear wheel of the sliding gear wheel (32), and the fast-speed planet wheel (36) meshes with the bigger-diameter gear wheel (34) of the sliding gear wheel (32),
- transmission means comprise a transmission chain (40) comprising a toothed wheel (38) arranged to mesh with the fast-speed planet wheel (36).

4. Machine for mechanised farming according to one of the preceding claims, characterised in that displacement means for displacing the sliding gear wheel (32) are able to position the sliding gear wheel (32) against the action of spring means (43) in a position, so called neutral position, in which said sliding gear wheel is in an intermediary position between the planet wheels (35, 36) in which it is non coupled with them.

5. Machine for mechanised farming according to one of the preceding claims, characterised in that the primary shaft (9) comprises a medial grooved section of a length at least equivalent to the course of the sliding gear wheel (32), said sliding gear wheel having a contact face with said primary shaft provided with grooves corresponding to said grooved section.

6. Machine for mechanised farming according to one of the preceding claims, characterised in that:
- the primary shaft (9) has, on a portion of its length incorporating the grooved section, a longitudinal bore (9a) opening at the level of one of the ends of said primary section, the grooved section having a peripheral wall in which a longitudinal port (30) is bored,
- displacement means for displacing the sliding gear wheel comprise:
. a rod (41) accommodated in the bore (9a) of the primary shaft (9) and having a length adapted to extend in the prolongation of said primary shaft, said rod being fixed to the sliding gear wheel (32) by means of a piece (42) extending through the port (30) in the grooved section,
. a stop member, so-called fixed stop member (45), mounted around the rod (41) at the level of the end thereof and fixed in rotation and in translation thereto, and a stop member, so-called movable stop member (44), movable in rotation and in translation relatively to said rod and blocked in translation relatively to the frame (1), spring means (43) consisting in a helical compression spring mounted around the rod (41) between said stop members,
. a lever (47), so-called fast-speed lever, articulated on the frame (1) around an axle perpendicular to the axle of the primary shaft (9) and adapted to contact the end of the rod (41) so as to displace the rod in an axial movement against the action of spring means (43) during its rotation caused by actuation means (58).

7. Machine for mechanised farming according to claim 6, characterised in that the fixed stop member (45) has the form of a cap covering the end of the rod (41) and provided with a front wall having a recess able to accommodate a ball (51) maintained in said seat by the lever (47).

8. Machine for mechanised farming according to claim 4 and one of claims 6 or 7 considered together, characterised in that it comprises:
- a second lever (48), so-called neutral lever, articulated on the frame (1) around the same articulation axle as that of the fast-speed lever (47), said lever being associated to actuation means (59) able to control its rotation, and comprising a contact stop (52) with the fast-speed lever (47) arranged to cause the simultaneous rotation of both levers (47, 48) during the actuation of the neutral lever (48),
- a stop member (53) arranged to limit the rotation angle of the neutral lever (48) and thus of the fast-speed lever (47) to a value causing the axial displacement of the rod (41) corresponding to the neutral position of the sliding gear wheel (32).

9. Machine for mechanised farming according to one the preceding claims, in which the motor (2) comprises a crankshaft (3) and a distributing shaft (4) driven in rotation in opposite directions, characterised in that the first mechanical transmission assembly comprises:
- a progressive motion pulley (12) mounted on the crankshaft (3) and a reverse motion pulley (13) mounted on the distributing shaft (4),
- two attached output pulleys (15, 16) mounted on the primary shaft (9),
- two V-belts (17-18) connecting the progressive motion pulley (12) and the reverse motion pulley (13) to the respective attached pulley (15, 16),
- a swinging support (19) articulated around an axle (20) parallel to the primary shaft (9) to be able to swing among three positions, namely
. an extreme position, so-called progressive motion position, for tensioning the V-belt (17) associated to the progressive motion pulley (12),
. an intermediate position, so-called out-of-gear position, and
. an extreme position, so-called reverse motion position, opposite to the preceding position, for tensioning the V-belt (18) associated to the reverse motion pulley (13),
- and control means (27, 28) for controlling the position of the swinging support (19).

10. Machine for mechanised farming according to claim 9, characterised in that the progressive motion pulley (12) and the associated output pulley (15) are so arranged that the V-belt (17) connecting said pulleys has an upper side in tension in the out-of-gear position.

11. Machine for mechanised farming according to one of claims 9 or 10, characterised in that the output pulley (16) associated to the reverse motion pulley (13) comprises a rim having a trapezoidal well the dimensions of which are higher than those of the section of the V-belt (18) connecting said pulleys.

12. Machine for mechanised farming according to claim 2, characterised in that it comprises a cable (60) tensioned between the plough trails (7, 8), said cable comprising, via a return pulley (61) mounted on the plough trail provided with the progressive motion handle (27), two sides the ends of which are fixed respectively to the plough tail (8) provided with the reverse motion handle (28) and to the front end of said reverse motion handle.

13. Machine for mechanised farming according to one of claims 1, 2, 4 or 9, characterised in that actuation means and control means comprise cables (23, 24, 54, 55) provided with compensating springs (25, 26, 56, 57).

14. Machine for mechanised farming according to one of the preceding claims, characterised in that it comprises a circuit breaker handle (62) connected to the motor (2) and arranged at guiding means (6).
